Europäisches Patentamt

(19) European Patent Office

Office européen des brevets

(11) Veröffentlichungsnummer : **0 097 347**
**B1**

(12) **EUROPÄISCHE PATENTSCHRIFT**

(45) Veröffentlichungstag der Patentschrift :
30.12.86

(51) Int. Cl.⁴ : **A 01 B 73/00**

(21) Anmeldenummer : 83105972.0

(22) Anmeldetag : 18.06.83

(54) **Geräteträger.**

(30) Priorität : 21.06.82 US 390435

(43) Veröffentlichungstag der Anmeldung :
04.01.84 Patentblatt 84/01

(45) Bekanntmachung des Hinweises auf die Patenterteilung : 30.12.86 Patentblatt 86/52

(84) Benannte Vertragsstaaten :
DE FR GB

(56) Entgegenhaltungen :
DE-A- 3 034 870
FR-A- 2 363 271
US-A- 2 527 607
US-A- 3 791 673
US-A- 4 319 643

(73) Patentinhaber : **DEERE & COMPANY**
**1 John Deere Road**
**Moline Illinois 61265 (US)**

(72) Erfinder : **Rettig, Vernon Eugene**
**R.R. No. 1, Box 120**
**Bondurant Iowa 50035 (US)**
Erfinder : **Bigbee, Marvin Lee**
**801 Sherman Drive**
**Ankeny Iowa 50021 (US)**
Erfinder : **Steilen, Ronald Michael**
**910 N.W. Second St.**
**Ankeny Iowa 50021 (US)**
Erfinder : **Head, Glenn Dale, Jr.**
**3400 Eastwood Dr.**
**Des Moines Iowa 50317 (US)**

(74) Vertreter : **Feldmann, Bernhard et al**
**DEERE & COMPANY European Office, Patent Depart-ment Steubenstrasse 36-42 Postfach 503**
**D-6800 Mannheim 1 (DE)**

## Beschreibung

Die Erfindung bezieht sich auf einen an ein ziehendes Fahrzeug anschließbaren Geräteträger mit einem sich auf Laufrädern auf dem Boden abstützenden Hautrahmen und zwei seitlich mit ihren inneren Enden an den Hauptrahmen aus einer quer zur Fahrtrichtung verlaufenden Arbeitsstellung nach vorne in eine Transportstellung über einen Stellzylinder verschwenkbar angeschlossenen und je einen Gerätetragbalken zur Aufnahme von Geräten aufweisenden Gerätetragrahmen, wobei an jedem Gerätetragrahmen mit Abstand zu deren inneren Enden je eine starre Zugstrebe angelenkt is, deren vordere Enden an einen Anschluß gelenkig angreifen, wobei beim Verstellen aus der Arbeitsstellung in die Transportstellung bzw. umgekehrt zwischen Anschluß und Hauptrahmen eine Relativ bewegung stattfindet.

Bei diesem bekannten Geräteträger (DE-A1-3 034 870) ist das Gleitstück an einer mit einem ziehenden Fahrzeug verbindbaren Zugachse angeschlossen. Diese ist in einem Rohr verschiebbar, an dem auch die Gerätetragrahmen angeschlossen sind. Zum Schwenken der Gerätetragrahmen aus der Transportstellung in die Einsatzstellung muß ein Sicherungsbolzen aus seiner sich durch das Rohr und die Zugachse erstreckenden Bohrung entnommen, die Laufräder blockiert und die Zugachse durch Rückwärtssetzen des ziehenden Fahrzeuges nach hinten verschoben werden. Danach ist die Zugachse wieder in dem Rohr zu sichern. Hierdurch ergibt sich eine äußerst aufwendige Gerätetragrahmenkonstruktion, die durch die in der Arbeitsstellung weit nach rückwärts überstehende Zugachse geprägt wird. Andererseits ist in dieser Druckschrift auch ausgeführt, daß die Verschwenkung aus der Arbeitsstellung in die Transportstellung durch einen Hydraulikzylinder erfolgen kann. Wie der oder die Hydraulikzylinder dann anzuordnen sind und wie das Grundkonzept des Geräteträgers dann auszubilden ist, geht aus dieser Druckschrift nicht hervor.

Die mit der Erfindung zu lösende Aufgabe wird darin gesehen, den Geräteträger hinsichtlich seiner Einklappvorrichtung vorteilhafter auszubilden, wobei zum Verschwenken der Gerätetragrahmen aus der Arbeitsstellung in die Transportstellung und umgekehrt ein möglichst geringer Kraftaufwand erforderlich ist.

Diese Aufgabe ist nach der Erfindung dadurch gelöst worden, daß der Anschluß auf einer mit dem Hauptrahmen fest verbundenen Gleitschiene verschiebbar und an den Stellzylinder angeschlossen ist, der anderenends an dem Hauptrahmen angreift, wobei das ziehende Fahrzeug an der Gleitschiene anschließbar ist. Auf diese Weise kann eine hydraulische Verstellung mit einem einzigen Stellzylinder ausgeführt werden, wobei die Verstellung während der Fahrt erfolgen kann.

Vorteilhaft können die Gerätetragbalken mit je einer Rolle zum Aufliegen in einer Stütze versehen sein, wobei die DE-A1-3 034 870 bereits eine einfache Abstützvorrichtung zeigt.

Zweckmäßig ist der Hauptrahmen mit Bezug auf die Anlenkstellen für die Gerätetragbalken an dem Hauptrahmen mit zwei nach vorne schräg zusammenlaufend angeordneten Streben versehen, die an das ziehende Fahrzeug anschließbar sind und zwischen denen in der Mitte die Gleitschiene vorgesehen ist, wobei der als Gleitstück ausgebildete Anschluß auf der Gleitschiene in mindestens einer vorherbestimmten Stellung feststellbar ist.

In den Zeichnungen ist ein nachfolgend näher erläutertes Ausführungsbeispiel der Erfindung dargestellt. Es zeigt :

Figur 1  den erfindungsgemäßen Geräteträger in perspektivischer Ansicht ;

Figur 2  den Geräteträger in seiner Transportstellung und in der Draufsicht ;

Figur 3  eine Hubvorrichtung für den Gerätetragrahmen ;

Figur 4  den Hauptrahmen in auseinandergezogener Darstellung.

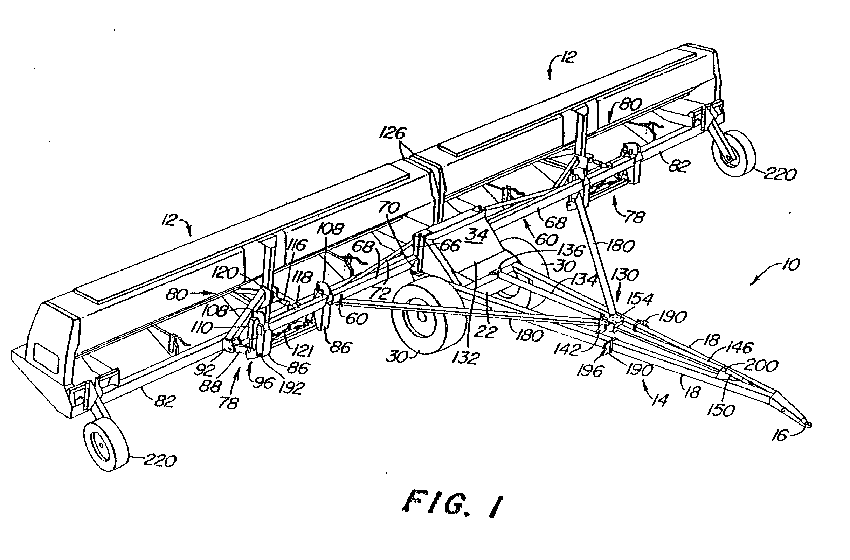

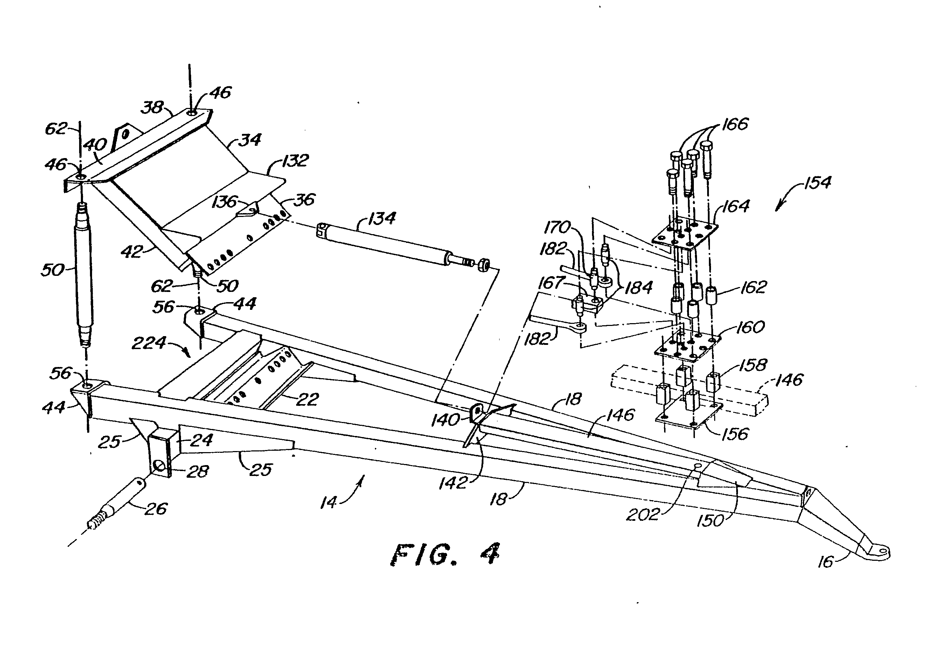

In Fig. 1 ist ein erfindungsgemäßer Geräteträger mit 10 bezeichnet, der zwei gleich ausgebildete Gerätetragrahmen 12 aufweist, die in ihrer Arbeitsstellung nebeneinander liegen, d. h. quer zur Fahrtrichtung. Der Geräteträger 10 weist im einzelnen einen Hauptrahmen 14 auf, der an seinem frontseitigen Ende mit einem Anschlußstück 16 versehen ist, das zum Anschluß des Geräteträgers an einen der Einfachheit halber in der Zeichnung nicht dargestellten Ackerschlepper dient. Das Anschlußstück 16 erstreckt sich mit Bezug auf die rückwärtige Blickrichtung nach oben und ist dort mit zwei nach rückwärts divergierenden zweckmäßig hohl ausgebildeten Streben 18 verbunden. Letztere sind im Bereich ihrer rückwärtigen Enden an ein unteres Verbindungsstück 22 angeschlossen. Ein Tragrahmen 24 für die Achse erstreckt sich quer nach außen von jeder Strebe 18 und ist mit diesen verschweißt und über Versteifungsplatten 25, wie sie aus Fig. 4 zu ersehen sind, verstärkt. Zwei Radachsen 26 erstrecken sich durch Stützlager 28 und sind in diesen angeordnet, die mit den gegenüberliegenden Seiten des Tragrahmens verschweißt sind. Das innerste Ende der Spindeln 26 ist mit dem unteren Teil des Tragrahmens 24 durch eine Stütze oder dergleichen verbunden, so daß zwei Laufräder 30 auf den Radachsen 26 zum Aufnehmen des Hauptrahmens 14 angeordnet werden können. Die Anordnung ist dabei derart getroffen, daß sich der Hauptrahmen 14 im Einsatz im wesentlichen horizontal über dem Erdboden erstreckt.

Ein nach rückwärts geneigt verlaufender Stützteil 24 ist mit einem unteren Frontteil 36 versehen, das wiederum mit dem Verbindungsstück 22 zwischen den Streben 18 verschraubt werden kann. Der Stützteil 34 erstreckt sich nach rückwärts und nach oben und ist mit einem Winkelstück 38 verschweißt, das wiederum einen sich im wesentlichen horizontal erstreckenden Oberteil 40 aufweist. Versteifungsprofile 42 sind dem Stützteil 34 und mit dem Winkelstück 38 verschweißt.

Zwei Lagerbügel 44 sind mit den rückwärtigen Enden der Streben 18 direkt unterhalb von Bohrungen 46, die in dem Oberteil 40 des Winkelstücks 38 eingearbeitet sind, verschweißt. Zueinander parallel verlaufende, hochstehende Zapfen 50, die Anlenkstellen bilden, sind zwischen den entsprechenden Lagerbügeln 44 und dem Oberteil 40 des Winkelstückes 38 vorgesehen. Die mit Gewinde versehenen Enden der Zapfen 50 erstrecken sich durch die Bohrungen 46 und noch durch Bohrungen 56 und die Lagerbügel 44.

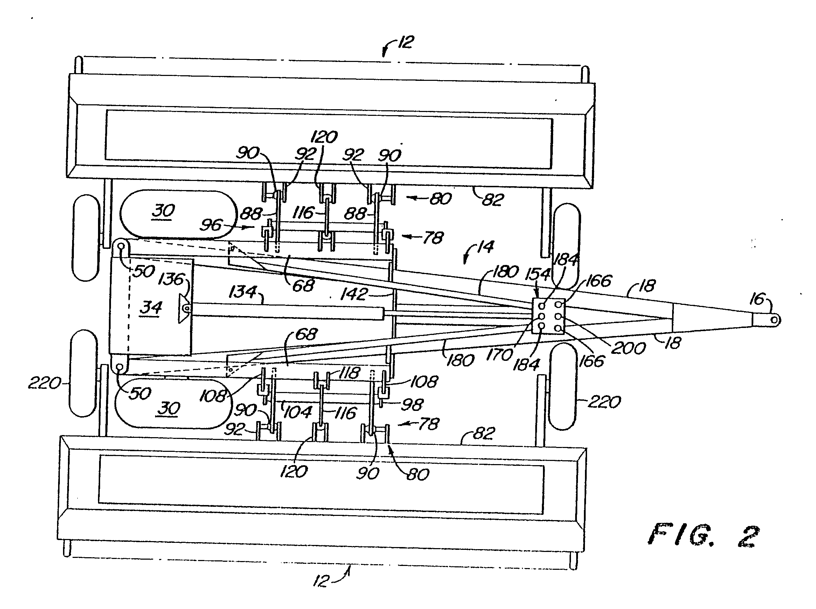

Ausleger 60 sind mit dem Hauptrahmen 14 derart verbunden, daß sie um vertikale Achsen 62 der Anlenkstellen 50 zwischen einer Arbeitsposition, wie sie in Fig. 1 dargestellt ist und einer eingeklappten Transportposition wie sie in Fig. 2 dargestellt ist, verschwenken können. Jeder Ausleger besteht im einzelnen aus einem hochstehenden, rohrförmig ausgebildeten Pfosten 66, der auf den entsprechenden Zapfen 50 zwischen dem Winkelstück 38 und dem Lagerbügel 44 vorgesehen ist. Zwei herkömmliche, der Einfachheit halber in der Zeichnung nicht dargestellte Lager sind an den Kopf- und Bodenenden der Pfosten 66 vorgesehen und ermöglichen, daß die Pfosten um die Achsen 62 verschwenken können. Des weiteren ist ein horizontal sich erstreckender, ebenfalls rohrförmig ausgebildeter Gerätetragbalken 68 an seinem radialen innersten Ende mit dem unteren Teil des Pfostens 66 verschweißt. Auflager 70 sind zwischen die Pfosten 66 und dem Gerätetragbalken 68 vorgesehen. Eine sich diagonal erstreckende Strebe ist zwischen den oberen Teil der Pfosten 66 und dem Mittebereich des Gerätetragbalkens 68 angeordnet. Die Auflager 70 und die Streben 72 dienen dazu, den Gerätetragbalken 68 in einer im wesentlichen horizontalen Ebene zu halten, wenn der Gerätetragbalken mit einem relativ schweren Gerät ausgerüstet ist. Der Stützteil 34 und das Winkelstück 38 bewirken, daß die Achsen 62 im wesentlichen sich aufrecht erstrecken und parallel zueinander verlaufen.

Eine Dreipunktaufhängung 78 ist am radialen äußeren Ende eines jeden Auslegers 60 vorgesehen und dient zur Aufnahme einer herkömmlichen dreipunktförmig ausgebildeten Anschlußvorrichtung 80, die von dem Gerätehauptrahmen 82 getragen ist. Jede Dreipunktaufhängung 78 weist ein Paar von quer auseinanderliegenden Stürzen 86 auf, wie sie in Fig. 1 zu ersehen sind und die mit dem Gerätetragbalken 68 verschweißt sind. Die Stürze 86 sind kanalförmig ausgebildet und nach hinten hin offen. Zwei untere Lenker oder Arme 88 sind schwenkbar mit den entsprechenden Stürzen 86 zwischen den Seiten der hierzu im Querschnitt U-förmig ausgebildeten unteren Teile vorgesehen. Die Arme 88 erstrecken sich von ihren Anlenkstellen an den Stürzen 86 aus nach rückwärts und nehmen an ihren rückwärtigen Enden Kugelgelenke 90 auf, die mit unteren Anschlußstellen 92 an der Anschlußvorrichtung 80 angeschlossen werden können.

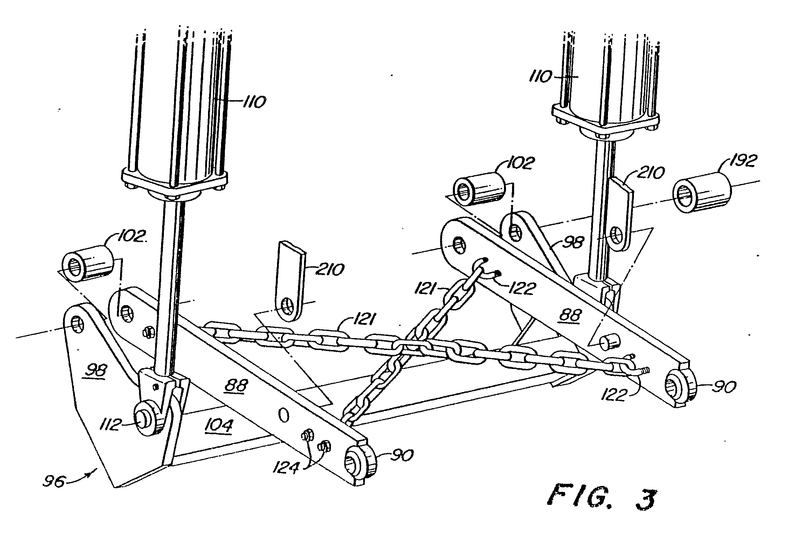

Eine Hubvorrichtung 96 ist ebenfalls schwenkbar mit den unteren Teilen der Stürze 86 derart verbunden, daß sie um die gleiche Achse wie die Arme 88 verschwenken kann. Die Hubvorrichtung 96 weist im einzelnen zwei seitlich auseinanderliegende Seitenplatten 98 auf, die außen von den entsprechenden Armen 88 liegen und zu diesen auf Abstand gehalten werden infolge von dort vorgesehenen Distanzhülsen 102 (Fig. 3). Mit den inneren Oberflächen der Seitenplatten 98 ist ein Torsionsteil 104 verschweißt, das dazu dient, daß die Seitenplatten gemeinsam verschwenken. Eine Zylinderstrebe 108 ist mit der Oberseite des Gerätetragbalkens 68 oberhalb eines jeden Sturzes 86 verschweißt und erstreckt sich von dort aus nach rückwärts. Hydraulisch beaufschlagbare Stellzylinder 110 sind mit ihren Anschlußenden mit den entsprechenden Zylinderstreben 108 verbunden und erstrecken sich von dort nach unten zu dem kolbenseitigen Anschluß 112 an den rückwärtigen Enden der Seitenplatten 98. Ein längenveränderlicher Arm 116 ist, wie aus Fig. 1 hervorgeht, zwischen einem oberen Anschluß 118, der mit dem Gerätetragbalken 68 zwischen den Zylinderstreben verschweißt ist, verbunden. Das rückwärtige Ende des Armes 116 wiederum ist mit einer Aufnahme 120 verbunden, die den oberen Anschlußpunkt der Anschlußvorrichtung 80 für das Gerät bildet.

Die Stellzylinder 110 für jede Hubvorrichtung 96 sind im einzelnen vorzugsweise als einseitig beaufschlagbare Zylinder ausgebildet und zu einer Druckquelle am Fahrzeug parallel geschaltet. Wenn nun die Stellzylinder 110 bei Druckbeaufschlagung eingefahren werden, dann schwenkt die Hubvorrichtung 96 nach oben um ihre Anlenkstelle an den Stürzen 86, wobei dann der Torsionsteil 104 gegen die untere Kante der Arme 88 zur Anlage kommt, wodurch diese wiederum nach oben um die gleichen Anschlußstellen verschwenken. Ein weiteres Druckbeaufschlagen der Stellzylinder 110 wird das an die Ausleger 60 angeschlossene Gerät dann soweit anheben, bis dessen gesamtes Gewicht von den Auslegern getragen wird. Der Torsionsteil 104 der Hubvorrichtung 96 bewirkt ebenfalls, daß die Stellzylinder 110 im wesentlichen gemeinsam zur Wirkung kommen, so daß das angeschlossene Gerät parallel ausgehoben wird. Der längenveränderliche Arm 116 bewirkt, daß eine mit Bezug auf die Fahrtrichtung geneigte Anordnung des Gerätes auch beim Anheben und beim Absenken beibehalten wird. Der Arm 116 ist in seiner Länge einstellbar, wodurch die erforderliche Neigung eingestellt werden kann.

Um nun das angeschlossene Gerät auf den Erdboden in eine Arbeitsposition absenken zu können, werden die Stellzylinder 110 ausgefahren und zwar dadurch, daß das Druckmedium an den kolbenseitigen Enden austreten kann, wodurch die Arme 88 nach unten schwenken. Die Stellzylinder 110 haben einen ausreichenden Hub, um zu bewirken, daß der Torsionsteil 104 noch tiefer abgesenkt werden kann als es der normalen Arbeitsstellung der Arme 88 entspricht, so daß die Arme frei auf- und abschwenken können, wenn Unebenheiten in der Bodenoberfläche auftreten. Die Arme 88 können unabhängig voneinander auf- und abwärts verschwenken und auch unabhängig von dem Torsionsteil 104. Um zu verhindern, daß das angeschlossene Gerät sich seitlich bewegt, sind Ketten 121 vorgesehen, die sich diagonal erstreckend zwischen den gegenüberliegenden Enden der Arme 88 vorgesehen sind (siehe Fig. 3). Die Ketten 121 sind verstellbar mit den Armen 88 über Bügelschrauben 122 verbunden. Durch Aufdrehen von Muttern 124 auf die Bügelschrauben 122 kann die Spannung in den Ketten varriiert werden.

Die Dreipunktaufhängung 78 ist radial auswärts mit Bezug auf die Längsmittellinie des Geräteträgers 10 angeordnet, so daß die radial innersten Enden der anzuschließenden Geräte dicht nebeneinander liegen, wie es aus Fig. 1 hervorgeht. Um eine maximale Flexibilität der Gesamtvorrichtung auf dem Feld zu erreichen, sind die Enden 126 des angeschlossenen Gerätes nicht fest miteinander verbunden, oder fest mit dem Geräteträger. In der bevorzugten Ausführungsform sind Gummiplatten, die in der Zeichnung nicht dargestellt sind, an den Enden 126 vorgesehen, um zu verhindern, daß das angeschlossene Gerät beschädigt wird, wenn eine relative Vertikalbewegung auftritt und die Enden miteinander Kontakt haben. Eine hydraulisch beaufschlagbare Einschwenkvorrichtung 130 dient dazu, die Ausleger 60 zwischen ihrer in Fig. 1 dargestellten Arbeitsposition und einer nach vorne eingeklappten Transportposition, wie sie in Fig. 2 dargestellt ist, zu verschwenken. Im einzelnen ist ein Tragteil 132 mit dem vorderen Teil des Stützteiles 34 gerade oberhalb der Streben 18 verschweißt. Ein sich längs erstreckender, hydraulisch beaufschlagbarer Stellzylinder 134 ist mit seinem zylinderseitigen Ende mit einer Stütze 136 verbunden, die wiederum mit der vorderen Kante des Tragteils 132 verschweißt ist. Der Stellzylinder 134 ist im wesentlichen horizontal angeordnet, und zwar in etwa in der Längsmittelebene infolge der Lage der Stütze und einer vorderen Stütze 140, die mittig zwischen den Streben 18 vorgesehen ist. Die Stütze ist im einzelnen mit einer sich quer erstreckenden Vertikalplatte 142 verschweißt, die ihrerseits auf die Streben 18 aufgeschweißt ist. Eine zweckmäßig hohl ausgebildete Gleitschiene 146 ist zwischen und über den Streben 18 vor der Vertikalplatte 142 vorgesehen. Ihr rückwärtiges Ende ist mit der Vertikalplatte 142 verschweißt, während ihr vorderes Ende im Bereich der frontseitigen Enden der Streben 18 in einem Teilstück 150 angeordnet ist. Die Stütze 140 nimmt das vordere Ende des Stellzylinders lose auf und bewirkt eine derartige Anordnung des Stellzylinders, daß seine Kolbenstange, wenn sie ein- oder ausgefahren wird, sich im wesentlichen parallel und direkt oberhalb der Gleitschiene 146 bewegt. Ein Gleitstück 154 ist auf der Gleitschiene 146 verschiebbar angeordnet und weist eine untere Platte 156 auf, die unterhalb der Gleitschiene 146 angeordnet ist, sowie zwei Paar im Querschnitt rechteckig ausgebildete hochstehende Distanzstücke 158, die an den Seiten der Gleitschiene 146 vorgesehen sind. Eine Zwischenplatte 160 ist an der Oberseite der Distanzstücke 158 direkt über der Oberfläche 160 vorgesehen. Im Querschnitt rund ausgebildete Distanzstücke 162 sind zwischen der Zwischenplatte 160 und einer oberen Platte 164 vorgesehen. Die Platten werden derart zusammengebaut, daß sie sich im zusammengebauten Zustand im wesentlichen zueinander parallel erstrecken, und sie werden durch Schrauben 166 oder andere geeignete Mittel gehalten.

Das kolbenseitige Ende des Stellzylinders 134 ist in ein Verbindungsstück 167 eingeschraubt, das wiederum zwischen der oberen Platte 164 und der Zwischenplatte 160 durch einen Zapfen 170 gehalten wird, der sich durch zentrisch angeordnete Öffnungen in den rückwärtigen Teilen der entsprechenden Platten erstreckt. Die Distanzstücke 158 legen die Winkelstellung des Gleitstückes 154 mit Bezug auf die Längsmittelachse des Hauptrahmens 14 fest und ermöglichen, daß das Gleitstück auf der Gleitschiene hin und her verschoben werden kann, wenn der Stellzylinder 134 ein- oder ausgefahren wird.

Die Einschwenkvorrichtung 130 weist ferner zwei starre sich diagonal erstreckende Zugstreben 180 auf. Die rückwärtigen Enden der Zugstreben 180 sind schwenkbar mit den entsprechenden Auslegern 60 im Bereich der innenliegenden Stürze 86 verbunden. Augenschrauben 182 sind in die frontseitigen Enden der Zugstreben 180 eingeschraubt und schwenkbar mit der oberen Platte und der Zwischenplatte 164 und 160 des Gleitstückes 154 durch zwei vertikale Zapfen 184 verbunden. Die Augenschrauben 182 können in die Enden der Zugstreben 180 herein- oder aus ihnen herausgedreht werden, wodurch die Länge der Zugstreben einstellbar ist.

Eine sich nach außen erstreckende und in Fig. 1 dargestellte Stütze 190 ist mit jeder Strebe 18 vorne vor der Vertikalplatte 142 verbunden. Der Abstand der Stützen 190 zu den vertikalen Achsen 62 entspricht in etwa dem Abstand der Achse 62 zu dem äußersten Sturz 86, ist allerdings etwas größer. Eine in Fig. 3 dargestellte Rolle 192 ist an jedem äußeren Sturz 86 über einen Zapfen angeschlossen, der gleichfalls als Anlenkstelle für die Seitenplatte 98 und den Arm 88 dient. Die Stütze 190 ist mit einer geneigt verlaufenden Aufnahmefläche 196 für die Rolle versehen und nimmt letztere auf, wenn sich der Geräteträger in seiner Transportposition, wie sie in Fig. 2 dargestellt ist, befindet. Dadurch kann die Stütze 190 das Ende des Auslegers 60 in der Transportposition aufnehmen. Die Stütze 190 selbst ist an den Streben 18 sowohl in Höhenrichtung als auch in Längsrichtung verstellbar, um sie zu den Rollen ausrichten zu können. Um nun den Geräteträger von seiner Arbeitsposition, wie sie in Fig. 1 dargestellt ist, in seine Transportposition nach Fig. 2 zu verschwenken, müssen zunächst die an die Ausleger angeschlossenen Geräte über die Dreipunktaufhängung 78 durch Einfahren der Stellzylinder 110 angehoben werden, wobei der Torsionsteil 104 gegen die Arme 88 zur Anlage kommt und diese nach oben verschwenkt. Die Geräte werden dann aus dem Boden ausgehoben und werden vollständig von den Auslegern 60 getragen. Der hydraulisch beaufschlagbare Stellzylinder 134, der ebenfalls mit einer Druckquelle am ziehenden Fahrzeug verbunden ist, wird dann derart beaufschlagt, daß er ausgefahren wird, wodurch sich das Gleitstück 154 nach vorne auf der Gleitschiene 146 bewegt, wodurch wiederum die Zugstreben 180 nach vorne gezogen werden, wobei die Ausleger um ihre vertikalen Achsen 62 verschwenken. der Stellzylinder 134 wird soweit ausgefahren, bis daß die Zugstreben 180 die Ausleger 60 um etwa 90° nach vorne aus ihrer Arbeitsposition verschwenkt haben. Die Gerätetragbalken 68 werden dann von den Pfosten 66 oberhalb der Oberkanten der Laufräder 30 getragen, so daß die Gerätetragbalken sich nach innen über die Laufräder bewegen. In der in Fig. 2 wiedergegebenen Transportstellung befinden sich die Ausleger 60 zwischen den Innenseiten der Laufräder 30. Die Dreipunktaufhängung 78 hat auch den vorderen Teil der angeschlossenen Geräte gegenüber dem Gerätetragbalken 68 derart verschwenkt, daß die Geräte nicht mit der Außenkante der Laufräder 30 in Berührung kommen.

Um zu verhindern, daß der Geräteträger 10 unbeabsichtigt aus der in Fig. 2 wiedergegebenen Transportstellung verschwenkt wird, ist ein Sicherungsstift 200 vorgesehen, der in Bohrungen in dem Gleitstück 154 und in eine Bohrung 202 in dem vorderen Ende der Gleitschiene 146 eingesetzt werden kann. Wenn nun die Bedienungsperson auch unbeabsichtigter Weise den hydraulischen Stellteil zum Einfahren des Stellzylinders 130 betätigt, dann wird der Sicherungsstift 200 verhindern, daß das Gleitstück 154 sich auf der Gleitschiene 146 verschiebt. Um die Geräte in ihre Arbeitsposition zurückschwenken zu können, braucht dann nur der Sicherungsstift 200 entfernt und der Stellzylinder 134 eingefahren zu werden, wodurch die Ausleger 60 nach rückwärts in ihre in Fig. 1 dargestellte Arbeitsposition verschwenken.

Eine Sicherungslasche 210 ist mit dem Gerätetragbalken 68 direkt über den Armen 88 verbunden, so daß, nachdem die Hubvorrichtung 96 die Geräte aus ihrer Arbeitsposition ausgehoben hat und in eine obere Transportstellung verbracht hat, die Sicherungslaschen 210 durch entsprechende Zapfen 212 (Fig. 3) gesichert werden können, wodurch die Geräte in der oberen Position gehalten werden.

In einer bevorzugten Ausführungsform sind die Geräte als Säeinheiten ausgebildet, die mit vorderen Stützrädern 220 versehen sind. Auch in der Transportstellung sind die Stützräder 220 ausgehoben und haben keine Bodenberührung mehr.

Das innerste Stützrad 220 ist dann jeweils hinter das zugehörige Laufrad 30 verschwenkt, während das äußere Stützrad ziemlich nah an den vorderen Teil des Hauptrahmens 14 herangeschwenkt wurde, wodurch sich eine sehr kompakte Transportstellung ergibt. In der Arbeitsstellung nach Fig. 1 laufen die beiden innenliegenden Stützräder 220 in einem Freiraum 224, der wie aus Fig. 4 hervorgeht, zwischen den rückwärtigen Enden der Streben 18 unterhalb des Stützteiles 34 vorgesehen ist.

## Patentansprüche

1. An ein ziehendes Fahrzeug anschließbarer Geräteträger mit einem sich auf Laufrädern (30) auf den Boden abstützenden Hauptrahmen (14) und zwei seitlich mit ihren inneren Enden an den Hauptrahmen aus einer quer zur Fahrtrichtung verlaufenden Arbeitsstellung nach vorne in eine Transportstellung über einen Stellzylinder (134) verschwenkbar angeschlossenen und je einen Gerätetragbalken (68) zur Aufnahme von Geräten aufweisenden Gerätetragrahmen (12), wobei an jedem Gerätetragrahmen (12) mit Abstand zu deren inneren Enden je eine starre Zugstrebe (180) angelenkt ist, deren vordere Enden an einen Anschluß (154) gelenkig angreifen, wobei beim Verstellen aus der Arbeitsstellung in die Transportstellung bzw. umgekehrt zwischen Anschluß (154) und Hauptrahmen eine Relativbewegung stattfindet, dadurch gekennzeichnet, daß der Anschluß (154) auf einer mit dem Hauptrahmen (14) fest verbundenen Gleitschiene (146) verschiebbar und an den Stellzylinder (134) angeschlossen ist, der anderenends an dem Hauptrahmen (14) angreift, wobei das ziehende Fahrzeug an der Gleitschiene (146) anschließbar ist.

2. Geräteträger nach Anspruch 1, dadurch gekennzeichnet, daß die Gerätetragbalken (68) mit je einer Rolle (192) zum Aufliegen in einer Stütze (190) versehen sind.

3. Geräteträger nach Anspruch 1 oder 2, dadurch gekennzeichnet, daß der Hauptrahmen (14) mit Bezug auf die Anlenkstellen (50) für die Gerätetragbalken (68) an dem Hauptrahmen (14) mit zwei nach vorne schräg zusammenlaufend angeordneten Streben (18) versehen ist, die an das ziehende Fahrzeug anschließbar sind und zwischen denen in der Mitte die Gleitschiene (146) vorgesehen ist.

4. Geräteträger nach einem oder mehreren der vorhergehenden Ansprüche, dadurch gekennzeichnet, daß der als Gleitstück ausgebildete Anschluß (154) auf der Gleitschiene (146) in mindestens einer vorherbestimmten Stellung feststellbar ist.

## Claims

1. An implement carrier which can be connected to a drawing vehicle and comprises a main frame (14) supported on running wheels (30) on the ground and two implement-carrying frames (12) which are connected laterally by their inner ends to the main frame, can be swivelled from a working position running perpendicular to the direction of travel forwards into a transport position by means of an adjusting cylinder (134) and each have an implement-carrying beam (68) for receiving implements, a rigid tie bar (180) being hinged to each implement-carrying frame (12) at a distance from their inner ends, the front ends of which tie bars (180) are attached hingedly to a joint (154), a relative motion occurring between the joint (154) and the main frame during adjustment from the working position into the transport position or vice versa, characterized in that the joint (154) is connected to the adjusting cylinder (134) and displaceably on a slide bar (146) firmly connected with the main frame (14), the adjusting cylinder (134) being attached at its other end to the main frame (14) and the drawing vehicle being connectable with the slide bar (146).

2. An implement carrier according to claim 1, characterized in that the implement-carrying beams (68) are each provided with a roller (192) to be supported in a bracket (190).

3. An implement carrier according to claim 1 or claim 2, characterized in that the main frame (14), with respect to the hinge points (50) for the implement-carrying beams (68) on the main frame (14), is provided with two beams (18) running obliquely forwards towards each other, which are connectable to the drawing vehicle and centrally between which the slide bar (146) is provided.

4. An implement carrier according to one or more of the preceding claims, characterized in that the joint (154) constructed as sliding piece can be fixed on the slide bar (146) in at least one predetermined position.

**Revendications**

1. Porte-outils pouvant être raccordé ou attelé à un véhicule tracteur, comprenant un châssis principal (14) prenant appui sur le sol par des roues porteuses (30) et deux châssis porte-outils (12) raccordés latéralement par leurs extrémités internes au châssis principal et pouvant pivoter sous l'action d'un cylindre de réglage ou de positionnement (134) depuis une position de travail s'étendant transversalement à la direction de marche, en direction de l'avant, jusque dans une position de transport, et comportant chacun une poutre porte-outils (68) pour la réception d'outils, un tirant rigide (180) étant articulé sur chaque châssis porte-outils (12) à une certaine distance de son extrémité interne, l'extrémité avant de ce tirant attaquant à articulation un point de raccordement (154), un mouvement relatif ayant lieu entre le point de raccordement (154) et le châssis principal lors d'un déplacement depuis la position de travail jusque dans la position de transport ou inversement, caractérisé en ce que le point de raccordement (154) est déplaçable en translation sur un rail formant coulisse (146) relié rigidement au châssis principal (14) et est raccordé au cylindre de réglage (134) qui, par son autre extrémité, attaque le châssis principal (14), le véhicule tracteur pouvant être raccordé au rail formant coulisse (146).

2. Porte-outils suivant la revendication 1, caractérisé en ce que les poutres porte-outils (68) sont munies chacune d'un galet (192) pour venir reposer dans une patte d'appui (190).

3. Porte-outils suivant la revendication 1 ou 2, caractérisé en ce que le châssis principal (14) est muni de deux longerons de flèche (18) allant en convergeant obliquement vers l'avant par rapport aux points d'articulation (50) des poutres porte-outils (68) sur le châssis principal (14), ces longerons pouvant être raccordés au véhicule tracteur et le rail formant coulisse (146) étant prévu au milieu entre les longerons.

4. Porte-outils suivant une ou plusieurs des revendications précédentes, caractérisé en ce que le point de raccordement (154), se présentant sous la forme d'un coulisseau, peut être immobilisé sur le rail formant coulisse (146) dans au moins une position prédéterminée.

FIG. 1

0 097 347

FIG. 2

0 097 347

FIG. 3

FIG. 4

0 097 347